# FASCICULE DE BREVET EUROPEEN

(11) **EP 3 762 631 B1**
(45) Date de publication et mention de la délivrance du brevet: **07.09.2022**
(21) Numéro de dépôt: 19705978.5
(22) Date de dépôt: 22.02.2019
(51) Int. Cl.: F16H 57/00

(54) **AGENCEMENT POUR L'ARRET AXIAL D'UN PIGNON SUR UN ARBRE**
ANORDNUNG ZUR AXIALEN ARRETIERUNG EINES RITZELS AUF EINER WELLE
ARRANGEMENT FOR AXIALLY STOPPING A PINION ON A SHAFT

(30) Priorité: 09.03.2018 FR 1852058
(43) Date de publication de la demande: 13.01.2021
(73) Titulaire: Renault s.a.s, 92100 Boulogne Billancourt (FR)
(72) Inventeur: MARCHAL, Nicolas, 78330 Le Fleury (FR); LALOS, Cédric, 78920 Ecquevilly (FR); POMMIES, Laurent, 78160 MARLY LE ROI (FR)
(74) Mandataire: Renault Group
(86) Numéro de dépôt international: PCT/EP2019/054483
(87) Numéro de publication internationale: WO 2019/170439

(56) Documents cités:
- WO-A1-2015/009226
- DE-A1-102007 021 342
- DE-B- 1 268 444
- DE-B3-102013 209 579
- FR-A1- 2 951 790

## Description

L'invention concerne l'empilage des bagues et des pignons, sur un arbre de boîte de vitesses de véhicule automobile.

Plus précisément, elle a pour objet un agencement pour l'arrêt axial d'un pignon tournant fou sur un arbre autour d'une cage à aiguilles engagée sur l'arbre à proximité d'un pignon fixe. Cet agencement comprend une portée cylindrique de l'arbre formant support pour la cage à aiguilles sur un premier tronçon de l'arbre, et un pignon fixe de diamètre supérieur à la portée de la cage à aiguilles, taillé dans la masse de l'arbre, sur un tronçon adjacent à celle-ci. Un tel agencement montre le document WO2015009226A1.

Dans les boîtes de vitesses, dites mécaniques (ou robotisées), à arbres parallèles, les différents rapports de réduction sont réalisés grâce à des couples de pignons en vis-à-vis, constamment en prise. Les couples de pignons engrenant mutuellement, sont constitués d'un pignon fixe et d'un pignon fou. En fonctionnement, la puissance mécanique ne transite que par un couple de pignons à la fois.

Les pignons fous sont en liaison pivot avec l'arbre qui les guide en rotation. Cette liaison pivot se transforme en liaison complète lors de l'engagement de la vitesse correspondante. Les couples de pignons sont donc toujours en prise mutuelle, mais aucun ne transmet le mouvement d'un arbre à l'autre tant que sa liaison pivot n'a pas été transformée en liaison complète par le système d'engagement de vitesse.

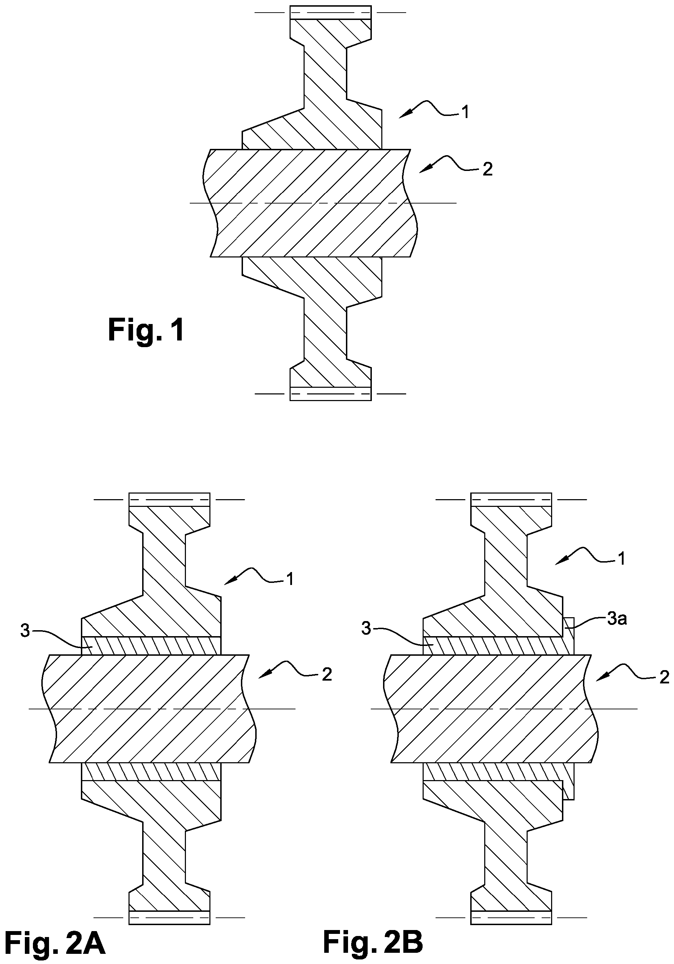

La liaison pivot entre un pignon fou 1 et son arbre 2, peut être directe, c'est-à-dire sans pièce interposée. Ce montage, illustré par la figure 1, est le plus simple. On peut l'adopter dans des conditions particulièrement favorables, où peu d'efforts transitent par le pignon fou. Il requiert cependant une bonne lubrification entre le pignon fou et l'arbre, pour limiter les frottements entre ces deux pièces et les pertes énergétiques induites.

La liaison entre l'arbre 2 et le pignon fou 1, fait souvent intervenir une bague intermédiaire 3, sans ou avec rebord radial 3a, comme sur les figures 2A et 2B. Cette bague permet de réduire les frottements, lorsque le pignon fou possède un mouvement relatif par rapport à l'arbre.

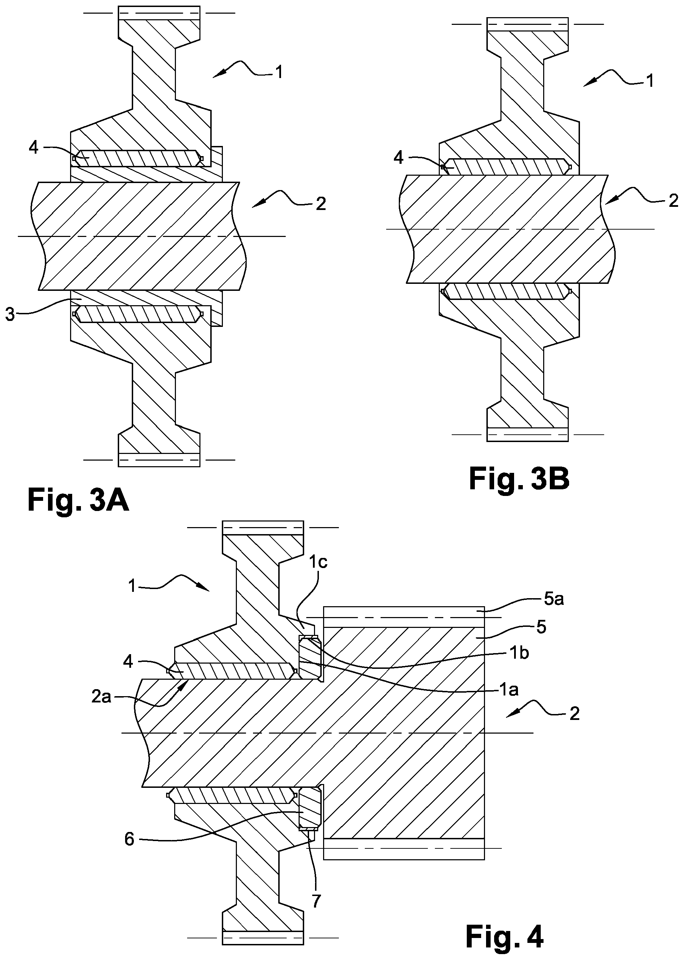

Lorsque le pignon fou subit des conditions plus sévères, on recourt à une cage à aiguilles 4, comme sur les figures 3A et 3B. La cage à aiguilles 4 disposée entre le pignon fou et l'arbre, limite encore les frottements. Cependant, elle requiert un très bon état de surface des zones de roulement. Dans de nombreux cas, une bague intermédiaire 3 est nécessaire entre la cage à aiguilles 4 et l'arbre (cf. figure 3A). La bague empêche aussi les aiguilles de se déplacer axialement. Si l'état de surface de l'arbre est suffisamment propre pour accueillir directement les aiguilles, la bague n'est pas nécessaire. Les aiguilles portent alors directement sur l'arbre (cf. figure 3B).

Lorsque le pignon fou est adjacent d'une denture fixe de l'arbre, par exemple celle d'un pignon d'attaque, on place souvent une rondelle, entre le pignon fou et la denture. La rondelle reprend les efforts axiaux qui transitent par les pignons, notamment dans la phase d'engagement du pignon fou sur l'arbre, lors d'un passage de vitesses.

Pour résister dans le temps aux efforts axiaux, la rondelle ne doit pas travailler à la fois en pression et en frottement. On cherche à interdire la rotation, entre la rondelle et le pignon fou, ou entre la rondelle et l'arbre. Il est possible de réaliser des cannelures sur l'arbre, et de monter sur celles-ci une rondelle cannelée sur son diamètre intérieur. Mais les cannelures restent difficiles à réaliser, car il faut conserver une portée lisse très précise, pour le roulage des aiguilles.

La présente invention vise à assurer l'arrêt axial du pignon fou sur son arbre.

Dans ce but, elle propose un agencement avec les caractéristiques de la revendication 1.

De préférence, la rondelle porte sur l'arbre à côté de la cage à aiguilles.

La présente invention sera mieux comprise à la lecture de la description suivante d'un mode de réalisation non limitatif de celle-ci, en se reportant aux dessins annexés, sur lesquels :
- la figure 1 montre un pignon fou en liaison directe sur son arbre,
- les figures 2A et 2B montrent un pignon fou porté par une bague intermédiaire,
- les figures 3A et 3B montrent un pignon fou tournant sur une cage à aiguilles, avec et sans bague intermédiaire, et
- la figure 4 illustre l'invention.

Sur la figure 4, on retrouve un arbre de boîte de vitesses 2, présentant une denture 5a de pignon fixe 5, par exemple de pignon d'attaque, taillée dans sa masse. Le pignon fou voisin 1, est guidé en rotation par une cage à aiguilles 4. Dans cet agencement, le pignon 1 tourne fou sur l'arbre 2, autour de la cage à aiguilles 4 engagée sur l'arbre 2, à proximité du pignon fixe 5. L'agencement comprend une portée cylindrique 2a de l'arbre, formant support pour la cage à aiguilles sur un premier tronçon de l'arbre. Le pignon fixe 5 présente un diamètre supérieur à la portée cylindrique de la cage à aiguilles. Il est taillé sur un tronçon de l'arbre, adjacent à celle-ci. Les aiguilles roulent directement sur l'arbre.

Le pignon fou 2 présente une découpe annulaire la, 1b, faisant face au pignon fixe 5, dans laquelle est encastrée une rondelle d'arrêt axial 6 du pignon fou. La rondelle 6 est immobilisée en rotation sur le pignon fou 1. La découpe libère un logement annulaire pour la rondelle. La découpe présente deux bords orthogonaux : une face latérale la faisant face au pignon fixe, et une face 1b cylindrique orthogonale à celle-ci, s'étendant sous un rebord latéral 1c du pignon fou, qui s'avance axialement en direction du pignon fixe 5.

La rondelle 6 est positionnée dans la découpe, entre le pignon fou 1 et le pignon fixe 5. Elle porte sur l'arbre, à côté de la cage à aiguilles 4. Elle est en appui axial sur la face latérale la de la découpe du pignon fou. Sa portée cylindrique extérieure est coiffée par le rebord axial 1c du pignon fou. Conformément à l'invention, la rondelle est fixée sur le pignon fou par le rebord 1c de celui-ci, sur sa face cylindrique 1b.

Dans un mode de réalisation particulier de l'invention, elle est frettée sur la face cylindrique 1b du rebord latéral 1c du pignon. Le frettage 7 est réalisé sur sa portée cylindrique extérieure, sous le rebord du pignon fou.

Cette solution respecte l'ensemble des contraintes du système, en interdisant notamment la rotation relative de la rondelle et du pignon fou. Le principal avantage de l'invention est de réaliser le guidage en rotation du pignon fou par une cage à aiguilles dans un encombrement optimal, en assurant la reprise d'effort axial entre le pignon fou et le pignon fixe par une rondelle intercalaire.

L'invention porte sur l'agencement pour l'arrêt axial d'un pignon fou décrit ci-dessus, sur un empilage de pignons présentant un tel agencement, ainsi que sur une boîte de vitesses comportant au moins un tel empilage de pignons.

## Revendications

1. Agencement pour l'arrêt axial d'un pignon (1) tournant fou sur un arbre (2) autour sur une cage à aiguilles (4) engagée sur l'arbre à proximité d'un pignon fixe (5), comprenant une portée cylindrique (2a) de l'arbre formant support pour la cage à aiguilles (4) du pignon fou (1) sur un premier tronçon de l'arbre, un pignon fixe (5) de diamètre supérieur à la portée de la cage à aiguilles, taillé dans la masse de l'arbre, sur un tronçon adjacent à celle-ci, **caractérisé en ce qu'**il comporte une rondelle d'arrêt axial (6) du pignon fou (1), immobilisée en rotation sur celui-ci et encastrée dans une découpe annulaire (la, 1b) du pignon fou (1) ménagée sous un rebord latéral (1c) de celui-ci qui s'avance axialement en direction du pignon fixe (5), et **en ce que** la rondelle d'arrêt (6) est fixée sous le rebord latéral (1c) du pignon fou (1).

2. Agencement selon la revendication 1, **caractérisé en ce que** la rondelle (6) porte sur l'arbre (2) à côté de la cage à aiguilles (4).

3. Agencement selon la revendication 1 ou 2, **caractérisé en ce que** la découpe (la, 1b) présente une face latérale (la) faisant face au pignon fixe et une face cylindrique (1b) orthogonale à celle-ci, s'étendant sous le rebord (1c) du pignon fou.

4. Agencement selon la revendication 3, **caractérisé en ce que** la rondelle (6) est fixée sur la face cylindrique (1b) du rebord latéral (1c) du pignon.

5. Agencement selon la revendication 3 ou 4, **caractérisé en ce que** la rondelle (6) est frettée sur la face cylindrique (1b) du rebord latéral (1c) du pignon.

6. Agencement selon l'une des revendications 3, 4 ou 5, **caractérisé en ce que** la rondelle (6) est en appui axial sur la face latérale (la) de la découpe du pignon fou.

7. Empilage de pignons sur un arbre de boîte de vitesses, **caractérisé en ce qu'**il présente un agencement conforme à l'une des revendications précédentes.

8. Boîte de vitesses **caractérisée en ce qu'**elle comporte au moins un empilage de pignons selon la revendication 7.

## Patentansprüche

1. Anordnung zum axialen Arretieren eines Ritzels (1), das sich freilaufend an einer Welle (2) und an einem Nadelkäfig (4) herum dreht, der an der Welle in der Nähe eines feststehenden Ritzels (5) in Eingriff steht, umfassend eine zylindrische Auflagefläche (2a) der Welle, die eine Stütze für den Nadelkäfig (4) des Mitlaufritzels (1) auf einem ersten Abschnitt der Welle bildet, wobei ein feststehendes Ritzel (5) mit einem Durchmesser, der größer als die Auflagefläche des Nadelkäfigs ist, aus der Masse der Welle an einem benachbarten Abschnitt davon geschnitten ist, **dadurch gekennzeichnet, dass** sie eine Axialarretierungsscheibe (6) des Mitlaufritzels (1) aufweist, die an diesem vor Verdrehen gesichert und in einem ringförmigen Ausschnitt (1a, 1b) des Mitlaufritzels (1) eingeschlossen ist, der unter einem seitlichen Rand (1c) des Mitlaufritzels angeordnet ist, das sich axial in Richtung des feststehenden Ritzels (5) vorschiebt, und dass die Arretierungsscheibe (6) unter dem seitlichen Rand (1c) des Mitlaufritzels (1) befestigt ist.

2. Anordnung nach Anspruch 1, **dadurch gekennzeichnet, dass** die Scheibe (6) an der Welle (2) neben dem Nadelkäfig (4) anliegt.

3. Anordnung nach Anspruch 1 oder 2, **dadurch gekennzeichnet, dass** der Ausschnitt (1a, 1b) eine seitliche Fläche (1a), die dem feststehenden Ritzel zugewandt ist, und eine orthogonal zu dieser verlaufende zylindrische Fläche (1b) aufweist, die sich unter dem Rand (1c) des Mitlaufritzels erstreckt.

4. Anordnung nach Anspruch 3, **dadurch gekennzeichnet, dass** die Scheibe (6) an der zylindrischen Fläche (1b) des seitlichen Rands (1c) des Ritzels befestigt ist.

5. Anordnung nach Anspruch 3 oder 4, **dadurch gekennzeichnet, dass** die Scheibe (6) mit Presspassung an der zylindrischen Fläche (1b) des seitlichen Rands (1c) des Ritzels angebracht ist.

6. Anordnung nach einem der Ansprüche 3, 4 oder 5, **dadurch gekennzeichnet, dass** die Scheibe (6) axial an der seitlichen Fläche (1a) des Ausschnitts des Mitlaufritzels anliegt.

7. Ritzelstapel an einer Getriebewelle, **dadurch gekennzeichnet, dass** er eine Anordnung nach einem der vorhergehenden Ansprüche aufweist.

8. Getriebe, **dadurch gekennzeichnet, dass** es mindestens einen Ritzelstapel nach Anspruch 7 aufweist.

## Claims

1. Arrangement for axially stopping a pinion gear (1) turning idle on a shaft (2) and around on a needle cage (4) engaged on the shaft close to a fixed pinion gear (5), comprising a cylindrical bearing surface (2a) of the shaft forming a support for the needle cage (4) of the idling pinion gear (1) on a first portion of the shaft, a fixed pinion gear (5), with a diameter greater than the bearing surface of the needle cage, cut in the mass of the shaft, on a portion adjacent thereto, **characterized in that** it has an axial-stop washer (6) for the idling pinion gear (1), rotationally immobilized thereon and embedded in an annular cutout (la, 1b) in the idling pinion gear (1) made below a lateral rim (1c) thereof that advances axially towards the fixed pinion gear (5), and **in that** the stop washer (6) is fixed below the lateral rim (1c) of the idling pinion gear (1).

2. Arrangement according to Claim 1, **characterized in that** the washer (6) bears on the shaft (2) next to the needle cage (4).

3. Arrangement according to Claim 1 or 2, **characterized in that** the cutout (la, 1b) has a lateral face (la) facing the fixed pinion gear and a cylindrical face (1b) orthogonal thereto, extending below the rim (1c) of the idling pinion gear.

4. Arrangement according to Claim 3, **characterized in that** the washer (6) is fixed to the cylindrical face (1b) of the lateral rim (1c) of the pinion gear.

5. Arrangement according to Claim 3 or 4, **characterized in that** the washer (6) is fitted on the cylindrical face (1b) of the lateral rim (1c) of the pinion gear by way of an interference fit.

6. Arrangement according to one of Claims 3, 4 and 5, **characterized in that** the washer (6) bears axially on the lateral face (la) of the cutout in the idling pinion gear.

7. Stack of pinion gears on a gearbox shaft, **characterized in that** it has an arrangement according to one of the preceding claims.

8. Gearbox, **characterized in that** it has at least one stack of pinion gears according to Claim 7.
